# EUROPEAN PATENT APPLICATION

(11) **EP 1 816 767 A2**
(43) Date of publication of application: **08.08.2007**
(21) Application number: 07002211.6
(22) Date of filing: 01.02.2007
(51) Int. Cl.: H04H 1/00

(54) **Method for transmitting/receiving data in a digital multimedia broadcasting system, and system thereof**

(30) Priority: 01.02.2006 KR 20060009869
(71) Applicant: Samsung Electronics Co., Ltd., Suwon-si, Gyeonggi-Do (KR)
(72) Inventor: Yiling, Xu c/o Samsung Electronics Co., Ltd., Suwon-si Gyeonggi-do (KR); Song, Jae-Yeon c/o Samsung Electronics Co., Ltd., Suwon-si Gyeonggi-do (KR); Wang, Ping c/o Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed is an apparatus for transmitting an Internet Protocol (IP) packet in a terrestrial Digital Multimedia Broadcasting system. An IP encapsulator receives an IP packet from an upper layer, and converts the IP packet into Ultra Lightweight Encapsulation (ULE) data and ULE-Forward Error Correction (FEC) data if there is a request for use of ULE and ULE-FEC. A Transmission Parameter Signaling (TPS) block sets TPS bits of the IP encapsulated data. A modulator modulates the TPS bits and the data output from the IP encapsulator.

## Description

### BACKGROUND OF THE INVENTION

### 1. Field of the Invention

The present invention relates generally to a Digital Multimedia Broadcasting (DMB) system, and in particular, to a method for transmitting/receiving data in a terrestrial DMB system, and a system thereof

### 2. Description of the Related Art

A Digital Multimedia Broadcasting - Handheld (DMB-H) system, which is a terrestrial DMB system presently being commercialized in China, is based on a Digital Video Broadcasting - Handheld (DVB-H) system. The DVB-H system is described immediately below.

Basically, the DVB-H system uses Multi-Protocol Encapsulation (MPE) technology for Internet Protocol (IP) packet encapsulation.

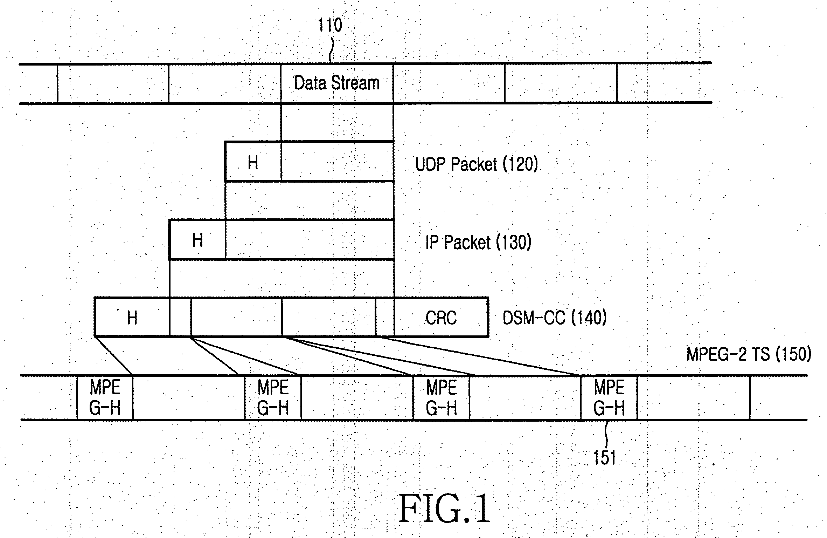

FIG 1 illustrates an MPE packet format in a DVB-H system. Referring to FIG. 1, a data stream 110 is converted into a User Datagram Protocol (UDP) packet 120, and then converted into an IP packet 130. When the IP packet 130 is transmitted via a DVB network, an Ethernet layer is changed to a DVB physical layer, such as Digital Video Broadcasting - Cable (DVB-C), Digital Video Broadcasting - Satellite (DVB-S) and Digital Video Broadcasting - Terrestrial (DVB-T). The IP packet 130, to be converted into a format transported in the DVB physical layer, is packaged in a Digital Storage Media - Command and Control (DSM-CC) section 140, and this is sub-divided into several Transport Stream (TS) packets 150. Therefore, the UDP packet 120 is encapsulated in the IP packet 130, and the IP packet 130 is encapsulated in the DSM-CC section 140. Finally, the DSM-CC section 140 is encapsulated in a TS packet. 'H' in MPEG-H indicates a UDP or IP header, as described in ISO/IEC 13818-6 and ETSI 301 192 standards.

Next, an MPE header is described. MPE, which is a method for transmitting packets in the DVB system, was first proposed in 1996, has developed into the IP standard through VDB communication.

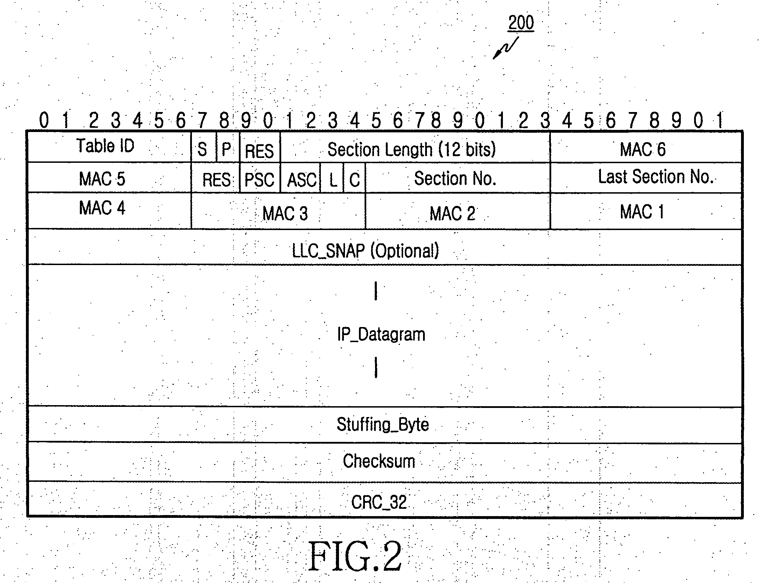

FIG 2 is a detailed illustration of a format of an MPE packet 200 in a DVB-H system. The fields of MPE packet 200 are described in ISO/IEC 13818-6 in detail.

In the DVB-H system, the IP packet 130 is transmitted in the MPEG2 TS packet 150 using the MPE packet 200. The IP packet 130 is encoded using an additional Reed-Solomon (RS) Forward Error Correction (FEC) code.

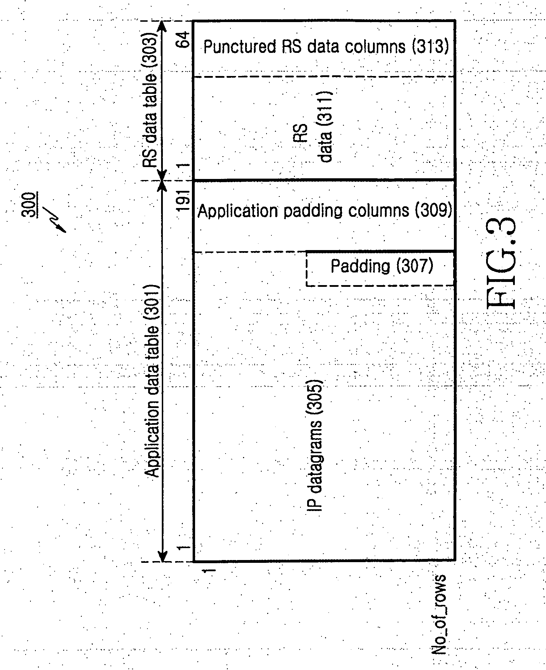

FIG 3 illustrates a frame format of an MPE-FEC packet 300 in a DVB-H system. Referring to FIG 3, the MPE-FEC packet 300 can be shown as a matrix having 255 columns. The MPE-FEC packet 300 is comprised of an application data table 301 and an RS data table 303. The application data table 301 is comprised of 191 columns, which are used for transmission of an IP datagram 305. The application data table 301 can have a padding region 307 used for performing zero padding when an insufficient amount of data exists during transmission of the IP datagram 305. The RS data table 303 is comprised of 64 columns, which are composed of parity information 311 and 313 of an MPE-FEC code.

Data symbols and error correction symbols obtained by FEC-coding the IP datagram 305 using an RS scheme are broadcast in an MPE-FEC section. The FEC section has a table identifier (ID) of 0x78, and its header has the same format as that of the MPE section.

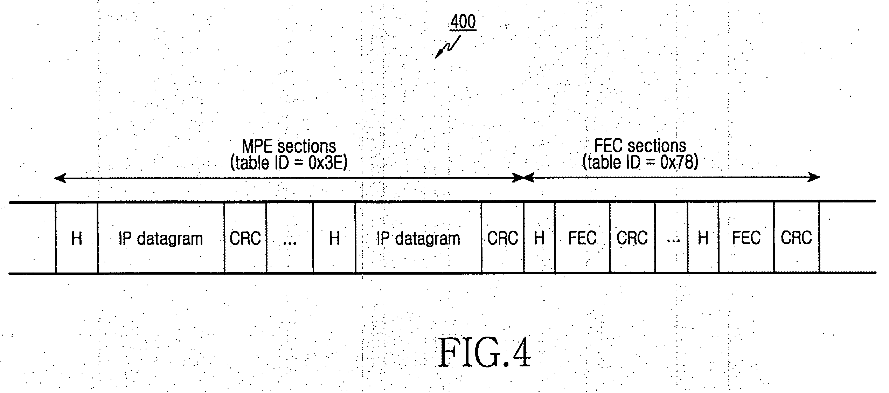

FIG 4 illustrates formats of an MPE section and an FEC section. Referring to FIG 4, reference numeral 400 shows an MPE section and an FEC section. The MPE section is comprised of a header H added to a transmission IP datagram, and more than one CRC (Cyclic Redundancy Check) packet. The FEC section is comprised of an FEC code generated in association with the IP datagram, its header H and more than one CRC packets.

Internet Engineering Task Force (IETF) ipdvb Working Group deals with Ultra Lightweight Encapsulation (ULE) as an encapsulation method. In ULE, a Sub-Network Data Unit (SNDU) means an encapsulated IP packet. However, in most IP-based broadcasting systems, like in the DMB-H system which is now proposed as a standard in China, because an IP packet encapsulation scheme such as the MPE-FEC scheme is not proposed, there is a need for such a data transmission/reception method.

### SUMMARY OF THE INVENTION

An aspect of the present invention is to address at least the problems and/or disadvantages and to provide at least the advantages described below. Accordingly, an aspect of the present invention is to provide a method for efficiently transmitting/receiving data in a DMB system, and system thereof

Another aspect of the present invention is to provide a data transmission/reception method capable of reducing complexity in a DMB-H system, and a system thereof.

According to one aspect of the present invention, there is provided an apparatus for transmitting an Internet Protocol (IP) packet in a terrestrial Digital Multimedia Broadcasting (DMB) system. The transmission apparatus includes an IP encapsulator for receiving an IP packet from an upper layer, and converting the IP packet into Ultra Lightweight Encapsulation (ULE) data and ULE-Forward Error Correction (FEC) data if there is a request for use of ULE and ULE-FEC; a Transmission Parameter Signaling (TPS) block for setting TPS bits of the IP encapsulated data; and a modulator for modulating the TPS bits and the data output from the IP encapsulator.

According to another aspect of the present invention, there is provided a method for transmitting an Internet Protocol (IP) packet in a terrestrial Digital Multimedia Broadcasting (DMB) system. The transmission method includes receiving an IP packet from an upper layer, and converting the IP packet into Ultra Lightweight Encapsulation (ULE) data and ULE-Forward Error Correction (FEC) data if there is a request for use of ULE and ULE-FEC; setting Transmission Parameter Signaling (TPS) bits of the IP encapsulated data; and modulating the TPS bits and the IP encapsulated data.

According to yet another aspect of the present invention, there is provided an apparatus for receiving an Internet Protocol (IP) packet in a terrestrial Digital Multimedia Broadcasting (DMB) system. The receiving apparatus includes a Radio Frequency (RF) block for converting a received signal into a signal in a baseband; a demodulator for demodulating Transmission Parameter Signaling (TPS) bits, Ultra Lightweight Encapsulation (ULE) data, and ULE-Forward Error Correction (FEC) data in the baseband signal; and a decapsulator for decapsulating the ULE data and the ULE-FEC data based on the demodulation TPS bits.

According to still another aspect of exemplary embodiments of the present invention, there is provided a method for receiving an Internet Protocol (IP) packet in a terrestrial Digital Multimedia Broadcasting (DMB) system. The reception method includes converting a received signal into a signal in a baseband; demodulating Transmission Parameter Signaling (TPS) bits, Ultra Lightweight Encapsulation (ULE) data, and ULE-Forward Error Correction (FEC) data in the baseband signal; and decapsulating the ULE data and the ULE-FEC data based on the demodulation TPS bits.

### BRIEF DESCRIPTION OF THE DRAWINGS

The above and other objects, features and advantages of the present invention will become more apparent from the following detailed description when taken in conjunction with the accompanying drawings in which:
FIG 1 illustrates an MPE packet format in a DVB-H system;
FIG 2 is a detailed illustration of a format of an MPE packet in a DVB-H system;
FIG 3 illustrates a frame format of an MPE-FEC packet in a DVB-H system;
FIG 4 illustrates formats of an MPE section and an FEC section in a DVB-H system;
FIG 5 illustrates an internal structure of ULE;
FIG 6 is a block diagram illustrating a DMB-H system according to the present invention;
FIG 7 is a diagram illustrating a packet structure of ULE used in the present invention;
FIG 8 illustrates an SNDU format in a DMB-H system according to the present invention;
FIG 9 illustrates a ULE-FEC frame structure in a DMB-H system according to the present invention;
FIG 10 is a flowchart illustrating a method for transmitting data in a transmitter of a DMB-H system according to the present invention; and
FIG 11 is a flowchart illustrating a method for receiving data in a receiver of a DMB-H system according to the present invention.

### DETAILED DESCRIPTION OF PREFERRED EMBODIMENTS

Preferred embodiments of the present invention will now be described in detail with reference to the annexed drawings. In the following description, a detailed description of known functions and configurations incorporated herein has been omitted for clarity and conciseness. The same drawing reference numeral is used throughout the various drawings to refer to the same elements, features and structures.

In the DMB-H system, because it is considered that IP is used, an IP packet encapsulation scheme should be determined, and MPE and ULE are available schemes. It is known that compared with MPE, ULE provides more efficient IP transmission with better elasticity.

Therefore, the present invention proposes a data transmission/reception method that employs the ULE-based IP packet encapsulation scheme in a DMB system using IP packets. In addition, the present invention provides a new scheme for ULE-FEC based on a ULE structure. In the present invention, an extension header is included in ULE, and FEC data can be transmitted in one SNDU along with IP datagram. In addition, using a basic header and an extension header of ULE, it is possible to distinguish the IP datagram from the FEC data. In this manner, a receiver can receive IP datagram and FEC data at once, and this scheme, compared with MPE-FEC, is low in processing complexity of the receiver.

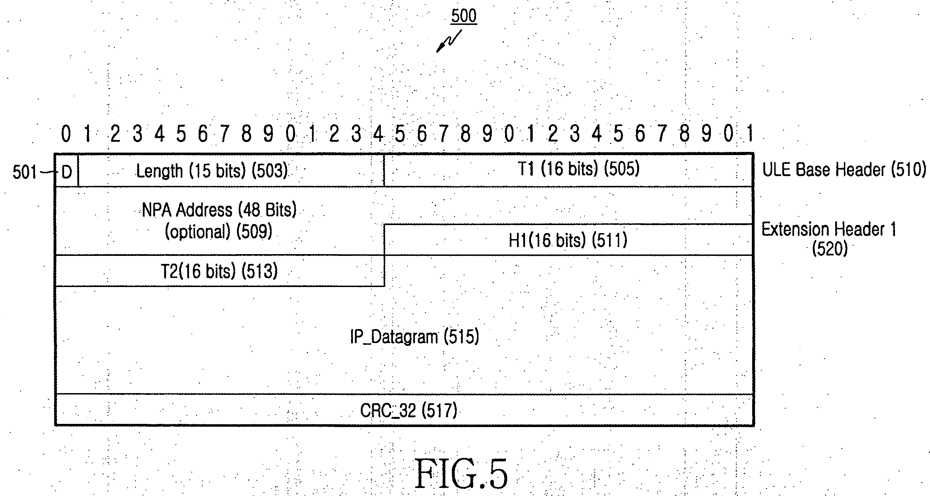

FIG 5 illustrates an internal structure of ULE. Referring to FIG 5, a Destination Address Absent field (D field) 501 is the most significant bit (MSB) of a Length field 503. If the D bit is '0' (D=0), it indicates presence of a destination address field, and if the D bit is '1' (D=1), it indicates absence of the destination address field. Basically, the D field 501 has a zero value except when it indicates an end of transmission. Length field 503 is composed of 15 bits, and indicates a length of an SNDU counted by the following Type field (T1) 505, which indicates presence/absence of a payload transmitted by the SNDU, or the next header. An Network Point of Attachment (NPA) address field 509 is a destination address field of an SNDU, and is optional. A CRC field 517 is a 32-bit error correction field. An extension header 520 is designated when the Type field has a value less than 1526. The Type field value is allocated depending on an Internet Assigned Number Authority (IANA) registry separated from ULE. One SNDU has consecutive extension headers, and is divided into two parts: length information H1 511 and type information T2 513 of the extension header 520.

A description is now provided of a data transmission/reception method employing ULE in a DMB system using IP packets according to the present invention. For convenience, the description herein is provided making reference to a DBM-H system.

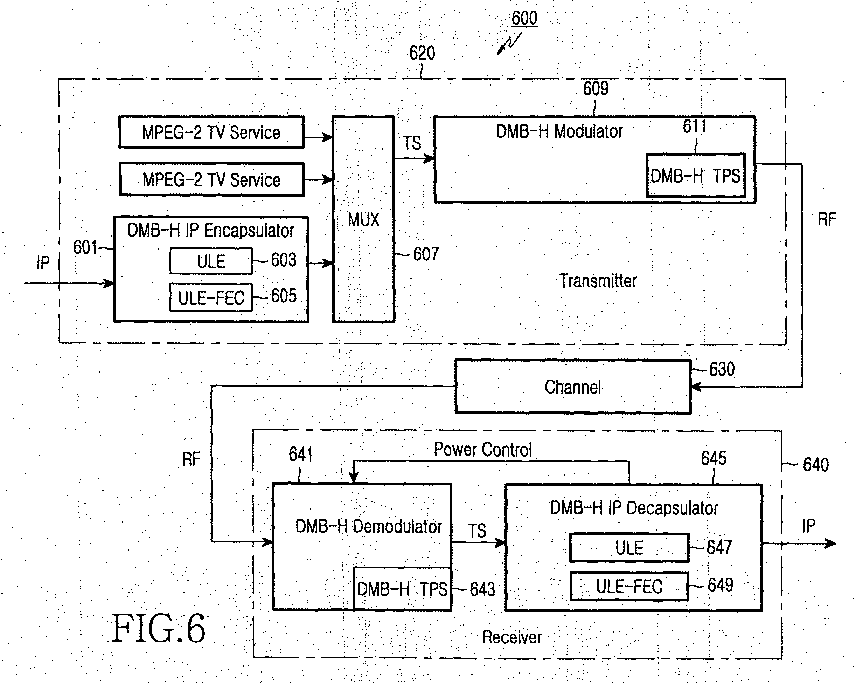

FIG 6 is a block diagram illustrating a DMB-H system according to the present invention, in which data is transmitted using ULE. Referring to FIG 6, a DMB-H system 600 is comprised of a transmitter 620 and a receiver 640. The transmitter 620 includes an IP encapsulator 601 for performing DMB-H IP encapsulation on an IP packet received from an upper layer, a multiplexer 607 for multiplexing the IP encapsulated packet and different MPEG-2 type broadcast service into a Transport Stream (TS), and a modulator 609 for modulating the received TS into a Radio Frequency (RF) band. The IP encapsulator 601 includes therein a ULE block 603 and a ULE-FEC block 605. The modulator 609 includes a TPS block 611 for setting Transmission Parameter Signaling (TPS) bits according to an encapsulation scheme provided in the DMB-H system, for the received TS, as described below.

The receiver 640 includes an RF block (not shown) for converting an RF signal received over a channel 630 on the air into a baseband TS signal, a demodulator 641 for demodulating the baseband signal, and an IP decapsulator 645 for decapsulating the TS signal received from the demodulator 641. The demodulator 641 separates the baseband signal into TPS information and data. The IP decapsulator 645 performs decapsulation according to the present invention, as further described below.

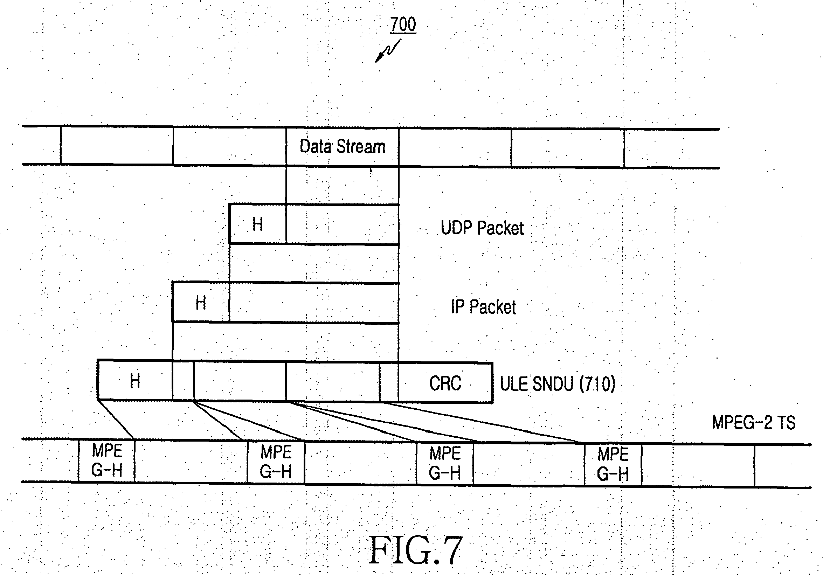

Because the DMB-H system transmits data using ULE, IP packets are packaged in an SNDU, and this is divided into several TS packets during transmission. For this, a packet structure of ULE used in the present invention is shown in FIG 7. As shown in FIG 7, a basic process for packet transmission is equal to that of MPE, but ULE is used. Therefore, the packet is packaged in an SNDU 710. In addition, the DMB system may apply ULE-FEC. There are two possible application methods of ULE-FEC: one is a method of transmitting FEC in an IP packet, and another is a method of transmitting FEC by separating it.

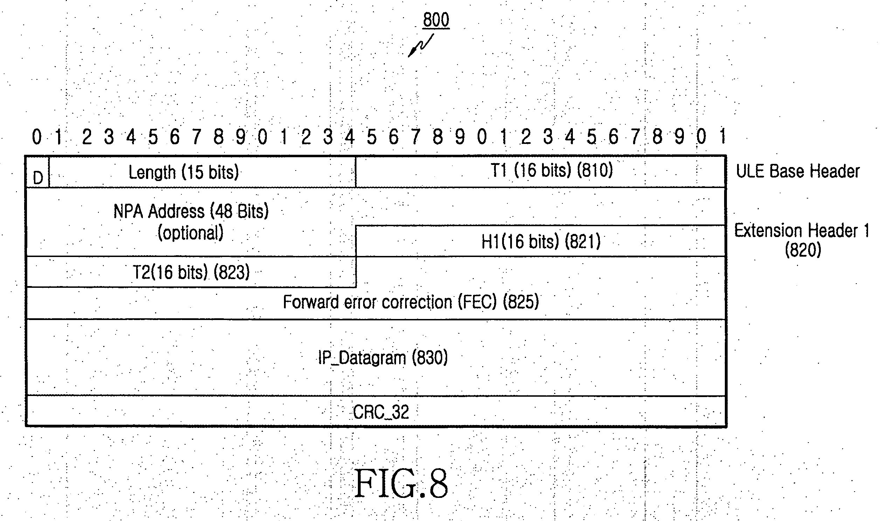

In the first method, ULE-FEC can be separated from each other during transmission, because an IP packet and an FEC interval can be distinguished from each other depending on type information. In the second method, one SNDU format is configured as shown in FIG. 8, wherein IP datagram and FEC data are transmitted together. An SNDU format configured in this method is shown in FIG 8, and each element thereof is similar to that of FIG 5. In configuration of the SNDU, values of the fields for transmitting FEC data are defined as follows.

A Type field (T1) 810 has a specific value indicating that an IP datagram 830 is transmitted in the SNDU, and an extension header 820 exists therein. This value is not determined in the present invention. H1 821 of the extension header 820 is allocated a specific value indicating a length of FEC data 825, and T2 823 is allocated a specific value indicating that the FEC data 825 is included in the SNDU.

In MPE-FEC, IP datagram and FEC data are separately transmitted, because they cannot be separated from each other with the MPE method when they are transmitted in one MPE section. In order to receive a datagram and its associated FEC data, a receiver should check a table ID of an MPE section individually. The receiver re-combines them, and checks and calculates an error thereof However, in ULE, because the extension header 820 exists, the FEC data 825 can be transmitted in one SNDU along with the IP datagram 830.

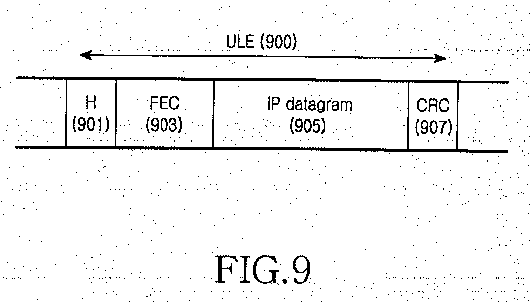

FIG 9 illustrates a frame structure of ULE-FEC encapsulated in the second method. A header 901 shown in FIG. 9 has a ULE basic header and an extension header. Using header 901, the two kinds of data blocks can be distinguished. In this manner, a receiver can receive IP datagram 905 and FEC data 903 together. This method, compared with MPE-FEC, reduces processing performed by the receiver.

In transmission parameters of DVB-H and DMB-T, two unused TPS bits can be defined and used to indicate use/nonuse of the ULE-FEC scheme. An exemplary configuration of this field is shown in Table 1. For example, '00' indicates nonuse of an encapsulation algorithm, '01' indicates use of only ULE, and '10' indicates use of ULE-FEC.

**TABLE 1**

| Three Unused TPS Bits | ULE-FEC | Algorithm |
|---|---|---|
| 00 | ULE, FEC not used | N/A |
| 01 | ULE Only | |
| 10 | ULE-FEC used | Reed-Solomon (255.191.64) |
| 11 | Reserved for Future Use | |

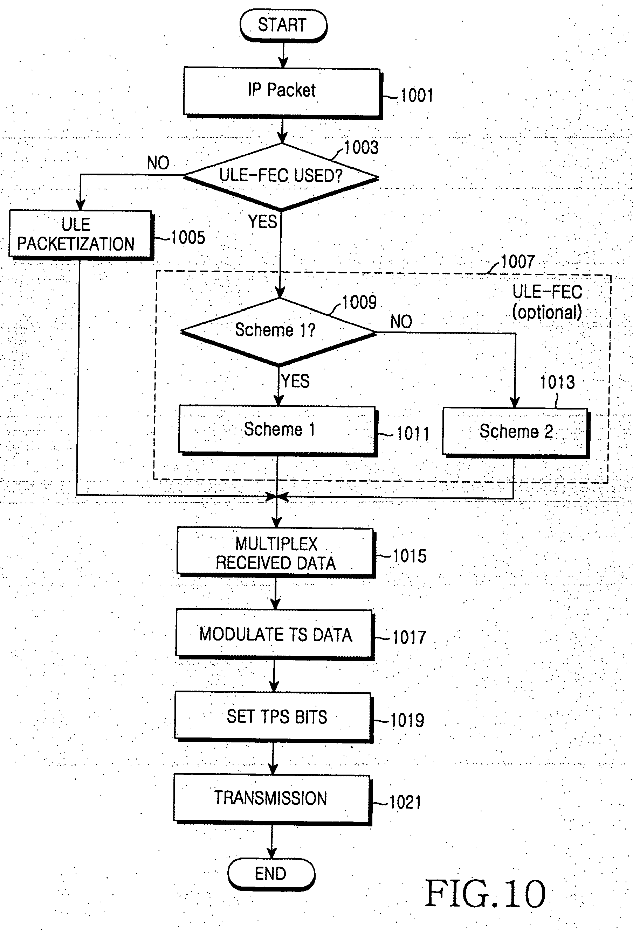

FIG. 10 is a flowchart illustrating a method for transmitting data in a transmitter 620 of a DMB-H system according to the present invention. Referring to FIG. 10, the transmitter 620 receives an IP packet from an upper layer in step 1001. After receiving the IP packet, the transmitter 620 checks in step 1003 whether ULE-FEC is used. If ULE-FEC is not used, i.e. if only ULE is used, the transmitter 620 proceeds to step 1005 where it ULE-encapsulates the IP packet to be transmitted in a ULE block 603. However, if ULE-FEC is used, the transmitter 620 proceeds to step 1009 where it determines one of the two schemes proposed in the present invention. That is, for a ULE-FEC block 605, of the first scheme, IP datagram and FEC data are separated from each other during transmission in step 1011. They are included in different sections, and distinguished with different type information. In the second scheme, IP datagram and FEC data are transmitted in one SNDU in step 1013. That is, as described in FIG. 9, an extension header T1 is used for IP datagram, and extension headers H1 and T2 are used for length and type information of FEC data.

In step 1015, after the transmitter 620 performs the ULE or ULE-FEC packetization, data is multiplexed with other MPEG data in an MPEG-2 TS block, generating TS data. A modulator 609 of the transmitter 620, receiving the TS data, modulates the TS data in step 1017. Thereafter, in step 1019, a TPS block 611 of the transmitter 620 sets TPS bits according to an encapsulation scheme according to the present invention. The TPS bit setting method is shown in Table 1 above. The transmitter 620 transmits the TPS bits using an RF block in step 1021. It should be noted herein that the process denoted by reference numeral 1007, i.e. ULE-FEC process, is optional.

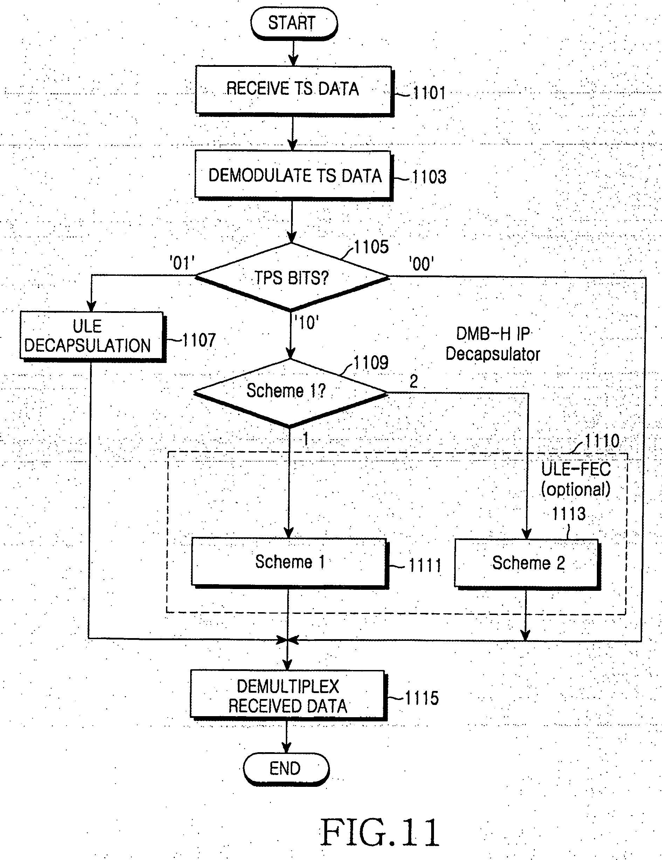

With reference to FIG. 11, a description is provided of a method for receiving data in a receiver 640 of the DMB-H system according to the present invention.
Referring to FIG. 11, the receiver 640 receives TS data in an RF band in step 1101, and demodulation the received TS data in step 1103. Thereafter, in step 1105, the receiver 640 checks use/nonuse of ULE-FEC by analyzing TPS bits indicating use/nonuse of ULE. A definition of the TPS bits is shown in Table 1, by way of example.
That is, if the TPS bits are '01', the receiver 640 performs ULE decapsulation in step 1107 and then proceeds to step 1115 where it receives an IP packet. If the TPS bits are '10', the receiver 640 determines, in step 1109, one of the two schemes proposed in the present invention for the ULE-FEC scheme. In case of a first scheme, the receiver 640 extracts, in step 1111, IP datagram and FEC data from different SNDUs using type information, combines them together, and detects and corrects an error. In case of a second scheme, the receiver 640 extracts, in step 1113, IP datagram and FEC data together using an extension header, and performs error correction thereon. Thereafter, in step 1115, the receiver 640 demultiplexes the IP packet.

If the TPS bits are '00' indicating nonuse of ULE and ULE-FEC, the receiver 640 proceeds to step 1115 where it demultiplexes the IP packet. In the forgoing description, the TPS bits are set as such by way of example, and can be set in different ways according to system.

Although the description of the present invention has been made with reference to the DMB-H system, the ULE according to the present invention can be applied to any DMB system using IP packets.

As can be understood from the foregoing description, the present invention applies ULE to the DMB-H system. Therefore, compared with MPE, the ULE scheme has lower complexity, yet provides higher elasticity and efficiency. In addition, with optional use of ULE-FEC, the present invention sends IP datagram and FEC information together in one SNDU using an extension header of ULE, thereby contributing to a reduction in complexity and receiver processing.

While the invention has been shown and described with reference to a certain preferred embodiment thereof, it will be understood by those skilled in the art that various changes in form and details may be made therein without departing from the spirit and scope of the invention, as defined by the appended claims.

## Claims

1. An apparatus for transmitting an Internet Protocol (IP) packet in a terrestrial Digital Multimedia Broadcasting (DMB) system, the apparatus comprising:
an IP encapsulator for receiving an IP packet from an upper layer, and converting the IP packet into Ultra Lightweight Encapsulation (ULE) data and ULE-Forward Error Correction (FEC) data if there is a request for use of ULE and ULE-FEC;
a Transmission Parameter Signaling (TPS) block for setting TPS bits of the IP encapsulated data; and
a modulator for modulating the TPS bits and data output from the IP encapsulator.

2. The apparatus of claim 1, wherein the TPS block defines the TPS bits as follows:
| Three Unused TPS Bits | ULE-FEC | Algorithm |
|---|---|---|
| 00 | ULE, FEC not used | N/A |
| 01 | ULE Only | |
| 10 | ULE-FEC used | Reed-Solomon (255.191.64) |
| 11 | Reserved for Future Use | |

3. The apparatus of claim 1, further comprising a multiplexer for multiplexing output of the IP encapsulator with other service data when the DMB system provides the other service data;
wherein the modulator modulates the multiplexed data and the TPS bits.

4. The apparatus of claim 1, wherein the modulated data is configured in a Sub-Network Data Unit (SNDU) format having an extension header, and a data region thereof is comprised of FEC data and an IP datagram.

5. The apparatus of claim 4, wherein the extension header includes information indicating a length and a region of the FEC.

6. The apparatus of claim 1, wherein the modulated data has a ULE basic header and an extension header, and are divided into FEC data and IP datagram during transmission.

7. The apparatus of claim 6, wherein the extension header has information on a region of the FEC and information on a region of the IP datagram.

8. A method for transmitting an Internet Protocol (IP) packet in a terrestrial Digital Multimedia Broadcasting (DMB) system, the method comprising:
receiving an IP packet from an upper layer, and converting the IP packet into Ultra Lightweight Encapsulation (ULE) data and ULE-Forward Error Correction (FEC) data if there is a request for use of ULE and ULE-FEC;
setting Transmission Parameter Signaling (TPS) bits of the IP encapsulated data; and
modulating the TPS bits and the IP encapsulated data.

9. The method of claim 8, wherein the TPS bits are defined as follows:
| Three Unused TPS Bits | ULE-FEC | Algorithm |
|---|---|---|
| 00 | ULE, FEC not used | N/A |
| 01 | ULE Only | |
| 10 | ULE-FEC used | Reed-Solomon (255.191.64) |
| 11 | Reserved for Future Use | |

10. The method of claim 8, further comprising:
multiplexing the IP encapsulated data with other service data when the DMB system provides the other service data.

11. The method of claim 8, wherein the modulated data is configured in a Sub-Network Data Unit (SNDU) format having an extension header, and a data region thereof is comprised of FEC data and an IP datagram.

12. The method of claim 11, wherein the extension header includes information indicating a length and a region of the FEC.

13. The method of claim 8, wherein the modulated data has a ULE basic header and an extension header, and are divided into FEC data and IP datagram during transmission.

14. The method of claim 13, wherein the extension header has information on a region of the FEC and information on a region of the IP datagram.

15. An apparatus for receiving an Internet Protocol (IP) packet in a terrestrial Digital Multimedia Broadcasting (DMB) system, the apparatus comprising:
a Radio Frequency (RF) block for converting a received signal into a signal in a baseband;
a demodulator for demodulating Transmission Parameter Signaling (TPS) bits, Ultra Lightweight Encapsulation (ULE) data and ULE-Forward Error Correction (FEC) data in the baseband signal; and
a decapsulator for decapsulating the ULE data and the ULE-FEC data based on the demodulation TPS bits.

16. The apparatus of claim 15, wherein the TPS bits are defined as follows:
| Three Unused TPS Bits | ULE-FEC | Algorithm |
|---|---|---|
| 00 | ULE, FEC not used | N/A |
| 01 | ULE Only | |
| 10 | ULE-FEC used | Reed-Solomon (255.191.64) |
| 11 | Reserved for Future Use | |

17. A method for receiving an Internet Protocol (IP) packet in a terrestrial Digital Multimedia Broadcasting (DMB) system, the method comprising:
converting a received signal into a signal in a baseband;
demodulating Transmission Parameter Signaling (TPS) bits, Ultra Lightweight Encapsulation (ULE) data and ULE-Forward Error Correction (FEC) data in the baseband signal; and
decapsulating the ULE data and the ULE-FEC data based on the demodulation TPS bits.

18. The method of claim 17, wherein the TPS bits are defined as follows:
| Three Unused TPS Bits | ULE-FEC | Algorithm |
|---|---|---|
| 00 | ULE, FEC not used | N/A |
| 01 | ULE Only | |
| 10 | ULE-FEC used | Reed-Solomon (255.191.64) |
| 11 | Reserved for Future Use | |
